# EUROPÄISCHE PATENTANMELDUNG

(11) **EP 2 594 738 A1**
(43) Veröffentlichungstag der Anmeldung: **22.05.2013**
(21) Anmeldenummer: 11189710.4
(22) Anmeldetag: 18.11.2011
(51) Int. Cl.: F01D 5/00, F01D 11/00, F01D 25/28

(54) **Bearbeitungsgerät und Verfahren zum Bearbeiten eines innerhalb eines Gehäuses einer Gasturbine angeordneten Dichtungselements**

(71) Anmelder: MTU Aero Engines GmbH, 80995 München (DE)
(72) Erfinder: Dr. Seidel, Frank, 30916 Isernhagen (DE); Dr. Rösing, Jürgen, 31515 Wunstorf (DE); Dr. Weidlich, Nils, 31535 Neustadt (DE)

(57) **Zusammenfassung**

Die Erfindung betrifft ein Bearbeitungsgerät (14) zum Bearbeiten eines innerhalb eines Gehäuses (12) einer Gasturbine (10) angeordneten Dichtungselements (16), wobei das Bearbeitungsgerät (14) zumindest im teil-montierten Zustand der Gasturbine (10) zumindest bereichsweise durch eine Öffnung (22) des Gehäuses (12) in einen Innenraum (24) der Gasturbine (10) einbringbar ist und eine Bearbeitungseinrichtung (15) umfasst, mittels welcher das Dichtungselement (16) nach dem Einbringen des Bearbeitungsgeräts (14) unter relativem Bewegen der Bearbeitungseinrichtung (15) gegenüber dem Dichtungselement (16) bearbeitbar ist. Die Erfindung betrifft weiterhin ein Verfahren zum Bearbeiten eines innerhalb eines Gehäuses (12) einer Gasturbine (10) angeordneten Dichtungselements (16).

## Beschreibung

Die Erfindung betrifft ein Bearbeitungsgerät sowie ein Verfahren zum Bearbeiten eines innerhalb eines Gehäuses einer Gasturbine angeordneten Dichtungselements.

Bei Gasturbinen wie beispielsweise Flugzeugtriebwerken von Flugzeugen vermindern Leckageströme durch Spalte zwischen zusammenwirkenden und sich relativ zueinander bewegenden Bauteilen den Wirkungsgrad. Um diese Spaltverluste zu minimieren, ist es erforderlich, den Spalt zwischen dem Rotor und den statischen Gehäuseteilen im laufenden Betrieb der Gasturbine möglichst gering zu halten. Das Spaltmaß zwischen dem Gehäuse und dem Rotor einer Gasturbine hat dabei maßgeblichen Einfluss auf den Wirkungsgrad der Gasturbine. Zur Minimierung des Spaltmaßes zwischen statischen und dynamischen Bauteilen sind daher üblicherweise ein oder mehrere spaltmaßbestimmende Dichtungselemente, beispielsweise ein Einlaufbelag oder dergleichen, zwischen den relativ zueinander beweglichen Bauteilen vorgesehen, wobei das oder die Dichtungselemente eine Dichtfläche bilden. Aufgrund hoher Belastungen und den daraus resultierenden Abnutzungen des Dichtungselements vergrößert sich jedoch das Spaltmaß im Laufe des Betriebs einer Gasturbine, was sowohl zu einem Leistungsverlust als auch zu einer Erhöhung des Kraftstoffbedarfs führt.

Das Spaltmaß wird daher während der Überholung der betreffenden Gasturbine neu eingestellt. Hierzu wird die Gasturbine üblicherweise zerlegt, so dass die betroffenen Bauteile und insbesondere das oder die Dichtungselemente an den verschlissenen Bereichen repariert werden können. Aus der WO 2001/076549 A1 ist ein alternatives Verfahren zu entnehmen, bei welchem Dichtungselemente während der Wartung eines Flugzeugtriebwerks im Einbauzustand, das heißt während die Dichtungselemente mit dem Turbinengehäuse verbunden sind und eine gemeinsame, sich über den gesamten Umfang des Turbinengehäuseteils erstreckende Dichtfläche bilden, mit einem keramischen Material beschichtet werden.

Auch hierbei muss das Flugzeugtriebwerk jedoch zunächst vom Flugzeug abmontiert und anschließend bis zur Modulebene zerlegt werden, wodurch sich entsprechend hohe Wartungskosten und Ausfallzeiten ergeben.

Aufgabe der vorliegenden Erfindung ist es, ein Bearbeitungsgerät sowie ein Verfahren zum Bearbeiten eines Dichtungselements einer Gasturbine zu schaffen, welche eine schnellere und kostengünstigere Bearbeitung des Dichtungselements ermöglichen.

Die Aufgabe wird erfindungsgemäß durch ein Bearbeitungsgerät mit den Merkmalen des Patentanspruchs 1 sowie durch ein Verfahren gemäß Patentanspruch 10 zum Bearbeiten eines innerhalb eines Gehäuses einer Gasturbine angeordneten Dichtungselements gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Bearbeitungsgeräts als vorteilhafte Ausgestaltungen des Verfahrens und umgekehrt anzusehen sind.

Bei einem Bearbeitungsgerät, welches eine schnellere und kostengünstigere Bearbeitung eines innerhalb eines Gehäuses einer Gasturbine angeordneten Dichtungselements ermöglicht, ist es erfindungsgemäß vorgesehen, dass das Bearbeitungsgerät zumindest im teil-montierten Zustand der Gasturbine zumindest bereichsweise durch eine Öffnung des Gehäuses in einen Innenraum der Gasturbine einbringbar ist und eine Bearbeitungseinrichtung umfasst, mittels welcher das Dichtungselement nach dem Einbringen des Bearbeitungsgeräts unter relativem Bewegen der Bearbeitungseinrichtung gegenüber dem Dichtungselement bearbeitbar ist. Im Unterschied zum Stand der Technik erlaubt das erfindungsgemäße Bearbeitungsgerät somit eine Bearbeitung des Dichtungselements, ohne dass die zugeordnete Gasturbine vollständig zerlegt oder im Fall eines Flugzeugtriebwerks zusätzlich von einer Flugzeugtragfläche demontiert werden müsste. Stattdessen erlaubt das erfindungsgemäße Bearbeitungsgerät beispielsweise eine Bearbeitung innen liegender Dichtungselemente von als Flugzeugtriebwerken ausgebildeten Gasturbinen, die an Flugzeugen montiert sind (sogenannte "On-Wing"-Reparatur), da das Bearbeitungsgerät lediglich teilweise oder vollständig durch die Öffnung des Turbinengehäuses eingeführt werden muss, wonach das Dichtungselement unter Relativbewegung der Bearbeitungseinrichtung gegenüber dem Dichtungselement bearbeitet werden kann. Bei der Öffnung kann es sich beispielsweise um eine häufig vorhandene Wartungsöffnung und/oder um eine in Strömungsrichtung betrachtet frontale, rückwärtige oder seitliche Öffnung der Gasturbine handeln. Somit kann das gewünschte Spaltmaß und damit der ursprüngliche Wirkungsgrad der Gasturbine besonders schnell und kostengünstig wieder hergestellt werden, wodurch auch erhebliche Kraftstoffeinsparungen erzielt werden. Darüber hinaus können die überholungsbedingten Ausfallzeiten der Gasturbine vorteilhaft gesenkt werden, wodurch weitere Kosteneinsparungen realisierbar sind.

In einer vorteilhaften Ausgestaltung der Erfindung ist vorgesehen, dass das Bearbeitungsgerät zum Bearbeiten eines gehäusefesten Dichtungselements und/oder eines rotorfesten Dichtungselements ausgebildet ist und/oder am Gehäuse und/oder an einem Rotor der Gasturbine anordenbar ist. Hierdurch kann das Bearbeitungsgerät besonders flexibel zum Bearbeiten von stator- und/oder rotorseitigen Dichtungselementen verwendet werden.

Weitere Vorteile ergeben sich, indem das Bearbeitungsgerät eine mit der Bearbeitungseinrichtung verbundene Halteeinrichtung umfasst, mittels welcher das Bearbeitungsgerät lösbar an einem Bauteil der Gasturbine festlegbar ist. Hierdurch kann das Bearbeitungsgerät zum Bearbeiten des Dichtungselements besonders schnell und einfach in einer definierten Stellung positioniert und nach dem Bearbeiten wieder entfernt werden. Durch eine Lagesicherung des Bearbeitungsgeräts wird zudem eine besonders hohe Bearbeitungspräzision mit einer entsprechend genauen Spaltmaßeinstellung ermöglicht.

In einer weiteren vorteilhaften Ausgestaltung der Erfindung ist vorgesehen, dass die Halteeinrichtung zum lösbaren Festlegen des Bearbeitungsgeräts am Gehäuse und/oder am Rotor, insbesondere zwischen benachbarten Laufschaufeln des Rotors, ausgebildet ist. Hierdurch kann die besonders hohe Bearbeitungspräzision bei der Bearbeitung von gehäusefesten und/oder von rotorfesten Dichtungselementen sichergestellt werden. Indem die Halteeinrichtung insbesondere eine Lagefixierbarkeit zwischen benachbarten Laufschaufeln bzw. Rotorblättern des Rotors ermöglicht, kann das Bearbeitungsgerät besonders einfach am Rotor festgelegt und unter Drehen des Rotors zur Bearbeitung eines gehäusefesten Dichtungselements an diesem entlang bewegt werden.

Indem die Halteeinrichtung einen nachgiebigen Haltekörper, insbesondere einen Fluidsack, umfasst, dessen Volumen zum Festlegen des Bearbeitungsgeräts vergrößerbar und zum Lösen des Bearbeitungsgeräts verkleinerbar ist, kann das Bearbeitungsgerät besonders schnell, einfach und ohne die Gefahr einer Beschädigung von Turbinenbauteilen durch Verspannen festgelegt und entsprechend einfach wieder abgelöst werden. Aufgrund der variablen Außenkontur des Haltekörpers kann das Bearbeitungsgerät zudem besonders einfach an unterschiedlich ausgebildeten Gasturbinen festgelegt werden. Hierdurch kann das Bearbeitungsgerät beispielsweise für unterschiedliche Flugzeugturbinen verwendet werden. Eine Volumenvergrößerung kann beispielsweise durch Beaufschlagen des Haltekörpers mit einem flüssigen und/oder gasförmigen Betriebsmedium erzeugt werden. Eine Volumenverkleinerung kann dementsprechend durch Entfernen des Betriebsmediums aus dem Haltekörper erreicht werden. Alternativ oder zusätzlich kann vorgesehen sein, dass die Halteeinrichtung zum lösbaren Festlegen des Bearbeitungsgeräts einen vorzugsweise schaltbaren Magneten und/oder eine Halteklammer umfasst. Auf diese Weise kann das Bearbeitungsgerät ebenfalls besonders schnell, einfach und ohne die Gefahr einer Beschädigung von Turbinenbauteilen festgelegt und entsprechend einfach wieder abgelöst werden.

In einer weiteren vorteilhaften Ausgestaltung der Erfindung ist vorgesehen, dass die Bearbeitungseinrichtung ein Trennwerkzeug, insbesondere ein Schleifwerkzeug, zur Formänderung des Dichtungselements und/oder einen Spachtel zum Auftragen und/oder Verteilen eines auf das Dichtungselement aufzutragenden Werkstoffs und/oder einen Werkstoffbehälter zum Bereitstellen des auf das Dichtungselement aufzutragenden Werkstoffs und/oder eine Härtungseinrichtung zum Aushärten von auf das Dichtungselement aufgetragenem Werkstoff und/oder eine Energiequelle, insbesondere eine Batterie, zum Versorgen des Bearbeitungsgeräts mit Betriebsenergie und/oder eine Steuer- oder Regeleinrichtung zum Steuern und/oder Regeln des Bearbeitungsgeräts und/oder eine Zuführleitung, insbesondere einen Schlauch, mittels welcher Werkstoff zum Dichtungselement transportierbar und durch eine Austrittsöffnung der Zuführleitung, insbesondere durch eine Düse, auf das Dichtungselement aufbringbar ist, umfasst. Hierdurch kann das Bearbeitungsgerät besonders flexibel ausgebildet und wahlweise zum Auftragen und/oder zum Abtragen von Werkstoff auf das Dichtungselement verwendet werden, so dass eine besonders präzise Spaltmaßeinstellung ermöglicht ist. Darüber hinaus ist es möglich, das Bearbeitungsgerät als autarkes Werkzeug auszubilden, welches nach dem Positionierung und gegebenenfalls Festlegen in einer gewünschten Position an der Gasturbine eine Bearbeitung des Dichtungselements ohne externe Versorgung, Steuerung oder dergleichen durchführen kann. Als Werkstoff eignen sich insbesondere Werkstoffe mit pastenartiger und spachtelfähiger Konsistenz.

In einer weiteren vorteilhaften Ausgestaltung der Erfindung ist vorgesehen, dass zumindest die Bearbeitungseinrichtung in sich beweglich, insbesondere biegsam und/oder ein- oder mehrfach gelenkig ausgebildet ist. Hierdurch können auch Dichtungselemente mit komplexen Geometrien bzw. schwer zugängliche Dichtungselemente einfach und präzise bearbeitet werden.

In weiterer Ausgestaltung hat es sich als vorteilhaft gezeigt, wenn das Bearbeitungsgerät eine Ermittlungseinrichtung zum Befunden des Dichtungselements umfasst. Hierdurch kann der Zustand des Dichtungselements vor, während und/oder nach dem Bearbeiten überprüft werden, so dass eine zuverlässige Beurteilung des Zustands des Dichtungselements ermöglicht ist. Die Ermittlungseinrichtung kann beispielsweise eine Kamera, einen Fühler, eine Laseroptik oder dergleichen umfassen.

In einer weiteren vorteilhaften Ausgestaltung der Erfindung ist vorgesehen, dass die Bearbeitungseinrichtung an einem bezüglich der Einführrichtung des Bearbeitungsgeräts distalen oder proximalen Endbereich des Bearbeitungsgeräts angeordnet ist. Hierdurch ist eine einfache Anpassung des Bearbeitungsgeräts an unterschiedliche Einsatzzwecke ermöglicht.

Ein weiterer Aspekt der Erfindung betrifft ein Verfahren zum Bearbeiten eines innerhalb eines Gehäuses einer Gasturbine angeordneten Dichtungselements, bei welchem wenigstens die Schritte zumindest bereichsweises Einbringen eines Bearbeitungsgeräts durch eine Öffnung des Gehäuses in einen Innenraum der Gasturbine und Bearbeiten des Dichtungselements mittels einer Bearbeitungseinrichtung des Bearbeitungsgeräts unter relativem Bewegen des Dichtungselements gegenüber der Bearbeitungseinrichtung durchgeführt werden, wobei alle Verfahrensschritte zumindest im teil-montierten Zustand der Gasturbine erfolgen. Unter dem montierten Zustand der Gasturbine ist dabei im Rahmen der Erfindung der nicht-zerlegte Zustand der Gasturbine zu verstehen. Beispielsweise kann eine als Flugzeugtriebwerk ausgebildete Gasturbine im Einbauzustand am Flugzeug, also "On-Wing", bearbeitet werden. Bei der Öffnung kann es sich beispielsweise um eine häufig vorhandene Wartungsöffnung und/oder um eine in Strömungsrichtung betrachtet frontale, rückwärtige oder seitliche Öffnung der Gasturbine handeln. Mit Hilfe des erfindungsgemäßen Verfahrens werden das gewünschte Spaltmaß und damit der ursprüngliche Wirkungsgrad der Gasturbine besonders schnell und kostengünstig wieder hergestellt, wodurch auch erhebliche Kraftstoffeinsparungen erzielt werden. Darüber hinaus werden die überholungsbedingten Ausfallzeiten der Gasturbine vorteilhaft gesenkt, wodurch weitere Kosteneinsparungen realisiert werden. Das im Rahmen des Verfahrens verwendete Bearbeitungsgerät kann gemäß einem der vorhergehenden Ausführungsbeispiele ausgebildet sein. Die sich hieraus ergebenden Merkmale und deren Vorteile sind den vorstehenden Beschreibungen zu entnehmen.

In einer vorteilhaften Ausgestaltung der Erfindung ist vorgesehen, dass zumindest die Bearbeitungseinrichtung bereichsweise und/oder vollständig durch die Öffnung des Gehäuses in den Innenraum der Gasturbine eingebracht wird, wonach ein rotorfestes Dichtungselement der Gasturbine unter relativem Bewegen des Rotors gegenüber dem Gehäuse mittels der Bearbeitungseinrichtung bearbeitet wird. Dies ermöglicht eine besonders schnelle und einfache Bearbeitung eines rotorseitigen Dichtungselements, mittels welchem eine Abdichtung des dynamischen Rotors gegenüber statischen Bauteilen der Gasturbine, beispielsweise gegenüber Leitschaufeln oder dergleichen, zu bewerkstelligen ist.

Alternativ hat es sich als vorteilhaft gezeigt, wenn das Bearbeitungsgerät zunächst vollständig in den Innenraum der Gasturbine eingebracht und mittels einer Halteeinrichtung lösbar am Rotor der Gasturbine festgelegt wird, wonach ein gehäusefestes Dichtungselement der Gasturbine unter relativem Bewegen des Rotors gegenüber dem Gehäuse mittels der Bearbeitungseinrichtung bearbeitet wird. Hierdurch kann das Bearbeitungsgerät als zumindest weitgehend autarkes Werkzeug zum Bearbeiten eines gehäuseseitigen Dichtungselements verwendet werden, wobei das gehäuseseitige Dichtungselement zur Abdichtung des Gehäuses oder eines gehäusefesten Bauteils gegenüber dem dynamischen Rotor der Gasturbine dient.

Eine besonders präzise Form- und Eigenschaftsänderung des Dichtungselements und damit eine entsprechend präzise Einstellung des Spaltmaßes ist in weiterer Ausgestaltung der Erfindung dadurch ermöglicht, dass beim Bearbeiten des Dichtungselements Werkstoff auf das Dichtungselement aufgetragen und/oder aufgetragener Werkstoff auf dem Dichtungselement verteilt und/oder auf das Dichtungselement aufgetragener Werkstoff ausgehärtet und/oder Material vom Dichtungselement abgetragen wird. Der Werkstoff wird vorzugsweise in pastöser Form verwendet.

Weitere Vorteile ergeben sich, wenn das Dichtungselement und die Bearbeitungseinrichtung manuell und/oder mittels eines Motors, insbesondere eines Boroskopmotors, und/oder mit einer Geschwindigkeit zwischen 1 U/min und 10 U/min relativ zueinander bewegt werden. Beispielsweise kann ein Rotor der Gasturbine nach dem Positionieren des Bearbeitungsgeräts manuell gedreht werden, um die Relativbewegung zwischen der Bearbeitungseinrichtung und dem zu bearbeitenden Dichtungselement zu erzeugen. Alternativ kann beispielsweise ein Boroskopmotor zum Drehen des Rotors verwendet werden, um das Dichtungselement zu bearbeiten. Indem das Dichtungselement und die Bearbeitungseinrichtung mit einer Geschwindigkeit zwischen 1 U/min und 10 U/min relativ zueinander bewegt werden, wird eine hohe Bearbeitungspräzision bei gleichzeitig möglichst geringer Bearbeitungszeit erzielt. Unter einer Geschwindigkeit zwischen 1 U/min und 10 U/min sind insbesondere Geschwindigkeiten von 1 U/min, 2 U/min, 3 U/min, 4 U/min, 5 U/min, 6 U/min, 7 U/min, 8 U/min, 9 U/min oder 10 U/min zu verstehen.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine schematische Schnittansicht einer Gasturbine, in deren Gehäuse ein erfindungsgemäßes Bearbeitungsgerät zum Bearbeiten eines Dichtungselements angeordnet ist;
- Fig. 2: eine weitere schematische Schnittansicht der Gasturbine, in deren Gehäuse vier unterschiedliche Ausführungsformen des erfindungsgemäßen Bearbeitungsgeräts gezeigt sind; und
- Fig. 3: eine weitere schematische Schnittansicht der Gasturbine mit einem bereichsweise innerhalb des Gehäuses angeordneten erfindungsgemäßen Bearbeitungsgerät.

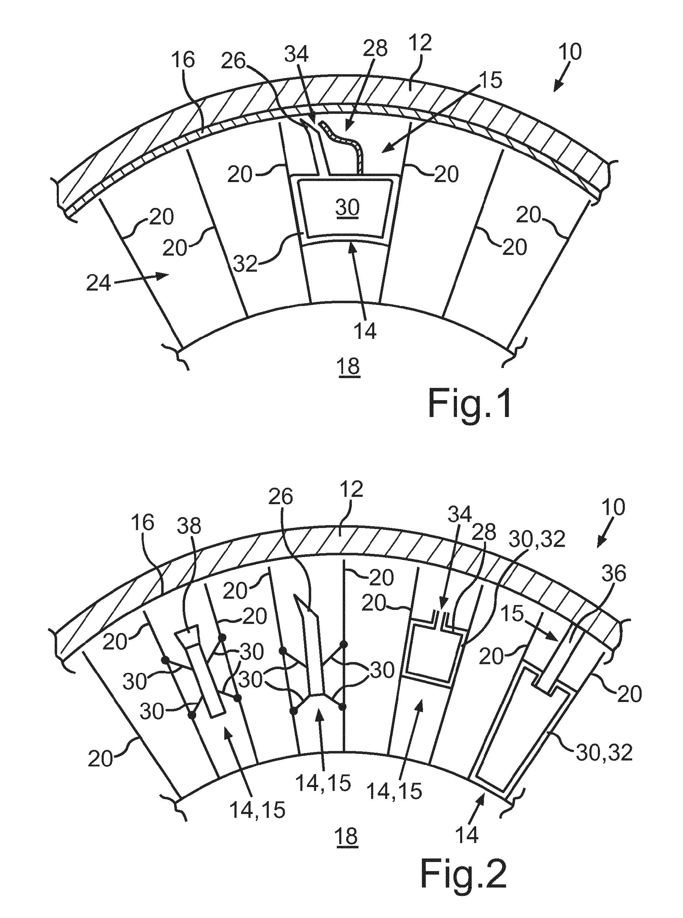

Fig. 1 zeigt eine schematische und ausschnittsweise Schnittansicht einer als Flugzeugtriebwerk ausgebildeten Gasturbine 10, in deren Gehäuse 12 ein Bearbeitungsgerät 14 zum Bearbeiten eines gehäusefesten Dichtungselements 16 angeordnet ist. Das Dichtungselement 16, welches vorliegend als sogenannte Einlaufdichtungen ausgebildet ist und einen Statorring bildet, dient in an sich bekannter Weise zur Abdichtung des statischen Gehäuses 12 gegenüber einem beschaufelten Rotor 18 und vermindert Leckageströme durch den Spalt zwischen Schaufelspitzen der Laufschaufeln 20 und dem Gehäuse 12. Um diese Spaltverluste zu minimieren und damit den Wirkungsgrad der Gasturbine 10 zu optimieren, ist es erforderlich, den Spalt zwischen den üblicherweise hochtourig laufenden Laufschaufeln 20 und dem den Rotor 18 umgebenden Dichtungselement 16 im laufenden Betrieb der Gasturbine 10 möglichst gering zu halten. Dies ist problematisch, da sich die Laufschaufeln 20 bei hoher Belastung sowohl durch thermische Beanspruchung als auch durch Zentrifugalkräfte in Radialrichtung längen, während das Gehäuse 12 in der Regel nur eine geringe thermische Dehnung und damit Vergrößerung des Gehäuseumfangs erfährt. Das Spaltmaß ist also im Betrieb der Gasturbine 10 veränderlich. In verschiedenen Betriebszuständen der Gasturbine 10 kann es dabei zu einem Einlaufen der Schaufelspitzen in das Dichtungselement 16 kommen, wodurch es zu einem Materialabtrag am Dichtungselement 16 und damit zu einer Spaltvergrößerung kommt.

Mit Hilfe des Bearbeitungsgeräts 14 bzw. des beschriebenen Bearbeitungsverfahrens kann die "Tip-Clearance", das heißt das Spaltmaß zwischen den Schaufelspitzen der Laufschaufeln 20 und dem Dichtungselement 16, durch Bearbeiten des Dichtungselements 16 eingestellt werden, ohne dass hierzu die Gasturbine 10 ausgebaut oder zerlegt werden müsste. Mit anderen Worten kann der optimale Zustand des Dichtungselements 16 im so genannten "On-Wing Zustand" der Gasturbine 10 wieder hergestellt werden.

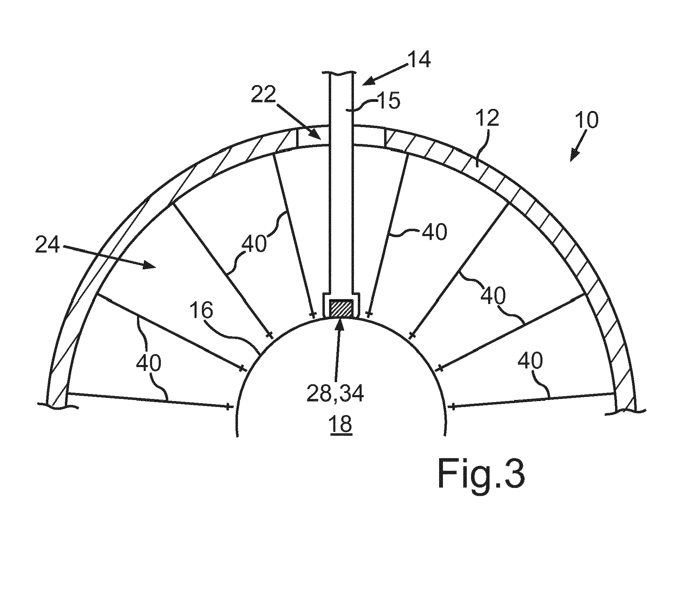

Zu diesem Zweck wird das Bearbeitungsgerät 14 vollständig beispielsweise durch eine bei Flugzeugtriebwerken üblicherweise ohnehin vorhandene Boroskopöffnung 22 (s. Fig. 3) in einen Innenraum 24 des Gehäuses 12 eingeführt und in einer definierten Position zwischen zwei Laufschaufeln 20 (Blades) verspannt. Grundsätzlich kann das Bearbeitungsgerät 14 aber natürlich auch durch andere Öffnungen 22 im Gehäuse 12 der Gasturbine 10 eingeführt werden. Das Bearbeitungsgerät 14 umfasst im vorliegenden Ausführungsbeispiel eine Bearbeitungseinrichtung 15 mit einem abziehlippenartigen Spachtel 26 zum Auftragen und Verteilen eines auf das Dichtungselement 16 aufzutragenden Werkstoffs sowie einen Werkstoffbehälter 28 zum Bereitstellen des auf das Dichtungselement 16 aufzutragenden Werkstoffs. Als Werkstoffe werden bevorzugt Werkstoffe in Form von Pasten verwendet, da diese besonders einfach auf Oberflächen aufgetragen und auf diesen verteilt werden können. Dabei kann grundsätzlich vorgesehen sein, dass zumindest die Bearbeitungseinrichtung 15 in sich beweglich, insbesondere biegsam und/oder ein- oder mehrfach gelenkig ausgebildet ist.

Weiterhin umfasst das Bearbeitungsgerät 14 eine Halteeinrichtung 30 zum lösbaren Festlegen des Bearbeitungsgeräts 14 zwischen den benachbarten Laufschaufeln 20 des Rotors 18. Die Halteeinrichtung 30 umfasst ihrerseits einen nachgiebigen Haltekörper 32, welcher vorliegend als Fluidsack bzw. als Gassack ausgebildet ist. Zum Festlegen des Bearbeitungsgeräts 14 muss der Haltekörper 32 somit lediglich aufgepumpt bzw. mit Betriebsmedium gefüllt werden. Aufgrund der Nachgiebigkeit des Haltekörpers 32 passt sich dieser automatisch an die Geometrie der Laufschaufeln 20 an. Darüber hinaus wird eine unerwünschte Beschädigung der Laufschaufeln 20 zuverlässig vermieden. Zum Abnehmen des Bearbeitungsgeräts 14 wird das Gas bzw. Betriebsmedium über eine entsprechende Ventileinrichtung (nicht gezeigt) wieder aus dem Haltekörper 32 abgelassen. Die Bearbeitungseinrichtung 15 ist dabei an einem bezüglich der Einführrichtung des Bearbeitungsgeräts distalen Endbereich des Bearbeitungsgeräts 14 angeordnet, während die Halteeinrichtung 30 an einem bezüglich der Einführrichtung des Bearbeitungsgeräts 14 proximalen Endbereich des Bearbeitungsgeräts 14 angeordnet ist. Alternativ oder zusätzlich kann vorgesehen sein, dass die Halteeinrichtung 30 einen Permanentmagneten, einen Elektromagneten oder eine mechanische Klammer oder Zwinge umfasst, um das Bearbeitungsgerät 14 lösbar festlegen zu können.

Man erkennt, dass der Spachtel 26 im gezeigten Ausführungsbeispiel eine Wand des Werkstoffbehälters 28 bildet, wobei der im Werkstoffbehälter 28 vorgehaltene Werkstoff - beispielsweise durch weiteres Aufblasen des Haltekörpers 32 ― durch eine Austrittsöffnung 34 im Bereich der Spachtellippe austritt und mittels des Spachtels 26 auf das Dichtungselement 16 aufgetragen und gleichmäßig auf diesem verteilt wird. Während des Bearbeitens des Dichtungselements 16 wird der Rotor 18 manuell oder mit Hilfe eines Boroskopmotors mit etwa 5 U/min gedreht. Das Bearbeitungsgerät 14 wird dabei so lange am Dichtungselement 16 entlang bewegt bis die Bearbeitung des Dichtungselements 16 abgeschlossen ist. Während der Rotationsbewegung wird der Werkstoffbehälter 28 entleert und der Werkstoff auf das Dichtungselement 16 aufgetragen. Alternativ kann vorgesehen sein, dass der Werkstoff direkt auf das Gehäuse 12 aufgetragen wird und das Dichtungselement 16 bildet. Ebenfalls kann vorgesehen sein, dass das Dichtungselement 16 vollständig oder nur teilweise mit Werkstoff beschichtet wird.

Die Zusammensetzung und Viskosität des jeweils zu verwendenden Werkstoffs hängt stark vom Anwendungsbereich, der Art der Gasturbine 10 und des zu bearbeitenden Dichtungselements 16 ab. Im Kompressorbereich eignen sich vor allem an sich bekannte Leichtmetallpulver, die mit organischen Bindern und dergleichen vermischt sind. Im Turbinenbereich können Mischungen aus Keramikpulver und sich verflüchtigenden Bindern oder Keramik/Metallgemische mit Bindern verwendet werden.

Nachdem das Dichtungselement 16 mit dem Werkstoff beschichtet wurde, kann das als autarkes Werkzeug fungierende Bearbeitungsgerät 14 durch Ablassen von Gas aus dem Haltekörper freigegeben und aus dem Innenraum 24 entfernt werden. Der Werkstoff wird ausgehärtet und bildet einen neuen Engspalt aus.

Fig. 2 zeigt eine weitere schematische Schnittansicht der Gasturbine 10, in deren Gehäuse 12 exemplarisch vier unterschiedliche Ausführungsformen des Bearbeitungsgeräts 14 zum Durchführen unterschiedlicher Bearbeitungsschritte gezeigt sind. Von links nach rechts betrachtet umfasst die erste Ausführungsform des Bearbeitungsgeräts 14 eine Bearbeitungseinrichtung 15 mit einer als Wärme- und/oder UV-Lampe ausgebildeten Härtungseinrichtung 38 zum aktiven Aushärten von auf das Dichtungselement 16 aufgetragenem Werkstoff. Weiterhin ist erkennbar, dass die Halteeinrichtung 30 im ersten Ausführungsbeispiel vier Haltearme umfasst, mittels welchen das Bearbeitungsgerät 14 zwischen zwei Laufschaufeln 20 festgelegt ist.

Im zweiten Ausführungsbeispiel umfasst die Bearbeitungseinrichtung 15 des Bearbeitungsgeräts 14 lediglich einen Spachtel 26, mittels welchem bereits aufgetragener Werkstoff auf dem Dichtungselement 16 verteilt wird. Die Halteeinrichtung 30 entspricht derjenigen des ersten Ausführungsbeispiels.

Im dritten Ausführungsbeispiel umfasst die Bearbeitungseinrichtung 15 des Bearbeitungsgeräts 14 einen Werkstoffbehälter 28 mit einer düsenartigen Austrittsöffnung 34, durch welche der Werkstoff auf das Dichtungselement 16 aufgespritzt wird. Der Werkstoffbehälter 28 dient dabei gleichzeitig als Zuführleitung zum Transportieren des Werkstoffs zum Dichtungselement 16. Die Halteeinrichtung 30 umfasst einen nachgiebigen Haltekörper 32, welcher einteilig mit dem Werkstoffbehälter 28 ausgebildet ist. Das Festlegen und Entfernen des Bearbeitungsgeräts 14 erfolgt dementsprechend in der im Zusammenhang mit Fig. 1 erläuterten Weise durch "Aufblasen" bzw. "Entlüften" des Haltekörpers 32.

Im rechten Ausführungsbeispiel umfasst das Bearbeitungsgerät 14 schließlich eine Bearbeitungseinrichtung 15, welche ein Schleifwerkzeug 36 umfasst. Die Halteeinrichtung 30 umfasst erneut den nachgiebigen Haltekörper 32, dessen Volumen durch Aufblasen bzw. Entlüften veränderbar ist. Im Unterschied zu den vorhergehenden Ausführungsbeispielen ist der Haltekörper 32 derart ausgebildet, dass das Bearbeitungsgerät 14 an einem Rotorgrundkörper des Rotors 18 abgestützt ist. Hierdurch kann durch Aufblasen bzw. Entlüften des Haltekörpers 32 der Anpressdruck des Schleifwerkzeugs 36 besonders einfach variiert werden, um einen gewünschten Konturverlauf des Dichtungselements 16 zu erzeugen. Durch Drehen des Rotors erfolgt die Relativbewegung zwischen dem Schleifwerkzeug 36 und dem Dichtungselement 16, so dass ein Schleifvorgang durchgeführt wird.

Die gezeigten Ausführungsformen des Bearbeitungsgeräts 14 können in Form von Einzelwerkzeugen ausgebildet und nacheinander bzw. unabhängig voneinander verwendet werden. Beispielsweise kann das Dichtungselement vor und/oder nach dem Auftragen von Werkstoff mit Hilfe des Spachtels 26 durch Anwendung des Schleifwerkzeugs 36 abgeschliffen werden. Alternativ kann vorgesehen sein, dass ein Bearbeitungsgerät 14 zwei oder mehr der vorstehend erläuterten Bearbeitungseinrichtungen 15 umfasst, so dass unterschiedliche Material auf- und/oder abtragende Bearbeitungsschritte mit demselben Bearbeitungsgerät 14 bzw. gleichzeitig durchführbar sind. Weiterhin können natürlich auch mehrere unterschiedliche Bearbeitungsgeräte 14 an unterschiedlichen Stellen der Gasturbine 10 positioniert und unterschiedliche Bearbeitungsschritte gleichzeitig, aber räumlich voneinander beabstandet durchgeführt werden. Dabei ist erneut zu betonen, dass alle Bearbeitungsschritte im montierten oder zumindest im teil-montierten Zustand der Gasturbine 10 durchführbar sind bzw. durchgeführt werden.

Fig. 3 zeigt eine weitere schematische Schnittansicht der Gasturbine 10 mit einem bereichsweise innerhalb des Gehäuses 12 angeordneten Bearbeitungsgerät 14. Im Unterschied zu den vorhergehenden Ausführungsbeispielen wird das Bearbeitungsgerät 14 zum Bearbeiten eines rotorfesten Dichtungselements 16 verwendet. Das rotorfeste Dichtungselement 16 dient dabei zum Abdichten des Rotors 18 gegenüber gehäusefesten Leitschaufeln 40 der Gasturbine 10.

Zum Bearbeiten des rotorfesten Dichtungselements 16 wird die Bearbeitungseinrichtung 15 des Bearbeitungsgeräts 14 zunächst bereichsweise durch eine Boroskopöffnung 22 des Gehäuses 12 in den Innenraum 24 der Gasturbine 10 eingebracht. Anschließend wird der Rotor 18 manuell oder motorisch gedreht, wodurch sich das Dichtungselement 16 relativ zur Bearbeitungseinrichtung 15 bewegt. Die Bearbeitungseinrichtung 15 umfasst im gezeigten Ausführungsbeispiel einen Werkstoffbehälter 28, durch dessen Austrittsöffnung 34 während des Drehens des Rotors 18 Werkstoff auf das Dichtungselement 16 aufgebracht und auf diesem verteilt wird. Alternativ oder zusätzlich kann natürlich auch beim Bearbeiten eines rotorfesten Dichtungselements 16 ein Bearbeitungsgerät 14 mit einer unterschiedlich ausgebildeten Bearbeitungseinrichtung 15 verwendet werden. Beispielsweise kann das Dichtungselement 16 vor und/oder nach dem Aufbringen von Werkstoff abgeschliffen werden, um einen gewünschten Konturverlauf des Dichtungselements 16 zu erzeugen. Auch bei der Bearbeitung des rotorfesten Dichtungselements 16 werden alle Verfahrensschritte im montierten oder im teil-montierten Zustand der Gasturbine durchgeführt.

## Patentansprüche

1. Bearbeitungsgerät (14) zum Bearbeiten eines innerhalb eines Gehäuses (12) einer Gasturbine (10) angeordneten Dichtungselements (16), **dadurch gekennzeichnet, dass** das Bearbeitungsgerät (14) zumindest im teil-montierten Zustand der Gasturbine (10) zumindest bereichsweise durch eine Öffnung (22) des Gehäuses (12) in einen Innenraum (24) der Gasturbine (10) einbringbar ist und eine Bearbeitungseinrichtung (15) umfasst, mittels welcher das Dichtungselement (16) nach dem Einbringen des Bearbeitungsgeräts (14) unter relativem Bewegen der Bearbeitungseinrichtung (15) gegenüber dem Dichtungselement (16) bearbeitbar ist.

2. Bearbeitungsgerät (14) nach Anspruch 1, **dadurch gekennzeichnet, dass** dieses zum Bearbeiten eines gehäusefesten Dichtungselements (16) und/oder eines rotorfesten Dichtungselements (16) ausgebildet ist und/oder am Gehäuse (12) und/oder an einem Rotor (18) der Gasturbine (10) anordenbar ist.

3. Bearbeitungsgerät (14) nach Anspruch 1 oder 2, **dadurch gekennzeichnet, dass** dieses eine mit der Bearbeitungseinrichtung (15) verbundene Halteeinrichtung (30) umfasst, mittels welcher das Bearbeitungsgerät (14) lösbar an einem Bauteil der Gasturbine (10) festlegbar ist.

4. Bearbeitungsgerät (14) nach Anspruch 3, **dadurch gekennzeichnet, dass** die Halteeinrichtung (30) zum lösbaren Festlegen des Bearbeitungsgeräts (14) am Gehäuse (12) und/oder am Rotor (18), insbesondere zwischen benachbarten Laufschaufeln (20) des Rotors (18), ausgebildet ist.

5. Bearbeitungsgerät (14) nach Anspruch 3 oder 4, **dadurch gekennzeichnet, dass** die Halteeinrichtung (30) einen nachgiebigen Haltekörper (32), insbesondere einen Fluidsack, dessen Volumen zum Festlegen des Bearbeitungsgeräts (14) vergrößerbar und zum Lösen des Bearbeitungsgeräts (14) verkleinerbar ist, und/oder einen vorzugsweise schaltbaren Magneten und/oder eine Halteklammer umfasst.

6. Bearbeitungsgerät (14) nach einem der Ansprüche 1 bis 5, **dadurch gekennzeichnet, dass** die Bearbeitungseinrichtung (15):
- ein Trennwerkzeug, insbesondere ein Schleifwerkzeug (36), zur Formänderung des Dichtungselements (16); und/oder
- einen Spachtel (26) zum Auftragen und/oder Verteilen eines auf das Dichtungselement (16) aufzutragenden Werkstoffs; und/oder
- einen Werkstoffbehälter (28) zum Bereitstellen des auf das Dichtungselement (16) aufzutragenden Werkstoffs; und/oder
- eine Härtungseinrichtung (38) zum Aushärten von auf das Dichtungselement (16) aufgetragenem Werkstoff; und/oder
- eine Energiequelle, insbesondere eine Batterie, zum Versorgen des Bearbeitungsgeräts (14) mit Betriebsenergie; und/oder
- eine Steuer- oder Regeleinrichtung zum Steuern und/oder Regeln des Bearbeitungsgeräts (14); und/oder
- eine Zuführleitung, insbesondere einen Schlauch, mittels welcher Werkstoff zum Dichtungselement (16) transportierbar und durch eine Austrittsöffnung (34), insbesondere durch eine Düse, auf das Dichtungselement (16) aufbringbar ist,
umfasst.

7. Bearbeitungsgerät (14) nach einem der Ansprüche 1 bis 6, **dadurch gekennzeichnet, dass** zumindest die Bearbeitungseinrichtung (15) in sich beweglich, insbesondere biegsam und/oder ein- oder mehrfach gelenkig ausgebildet ist.

8. Bearbeitungsgerät (14) nach einem der Ansprüche 1 bis 7, **dadurch gekennzeichnet, dass** dieses eine Ermittlungseinrichtung zum Befunden des Dichtungselements (16) umfasst.

9. Bearbeitungsgerät (14) nach einem der Ansprüche 1 bis 8, **dadurch gekennzeichnet, dass** die Bearbeitungseinrichtung (15) an einem bezüglich der Einführrichtung des Bearbeitungsgeräts (14) distalen oder proximalen Endbereich des Bearbeitungsgeräts (14) angeordnet ist.

10. Verfahren zum Bearbeiten eines innerhalb eines Gehäuses (12) einer Gasturbine (10) angeordneten Dichtungselements (16), folgende Schritte umfassend:
- zumindest bereichsweises Einbringen eines Bearbeitungsgeräts (14) durch eine Öffnung (22) des Gehäuses (12) in einen Innenraum (24) der Gasturbine (10); und
- Bearbeiten des Dichtungselements (16) mittels einer Bearbeitungseinrichtung (15) des Bearbeitungsgeräts (14) unter relativem Bewegen der Bearbeitungseinrichtung (15) gegenüber dem Dichtungselement (16),
wobei alle Verfahrensschritte zumindest im teil-montierten Zustand der Gasturbine (10) durchgeführt werden.

11. Verfahren nach Anspruch 10, **dadurch gekennzeichnet, dass** zumindest die Bearbeitungseinrichtung (15) bereichsweise und/oder vollständig durch die Öffnung (22) des Gehäuses (12) in den Innenraum der Gasturbine (10) eingebracht wird, wonach ein rotorfestes Dichtungselement (16) der Gasturbine (10) unter relativem Bewegen des Rotors (18) gegenüber dem Gehäuse (12) mittels der Bearbeitungseinrichtung (16) bearbeitet wird.

12. Verfahren nach Anspruch 10, **dadurch gekennzeichnet, dass** das Bearbeitungsgerät (14) zunächst vollständig in den Innenraum (24) der Gasturbine (10) eingebracht und mittels einer Halteeinrichtung (30) lösbar am Rotor (18) der Gasturbine (10) festgelegt wird, wonach ein gehäusefestes Dichtungselement (16) der Gasturbine (10) unter relativem Bewegen des Rotors (18) gegenüber dem Gehäuse (12) mittels der Bearbeitungseinrichtung (15) bearbeitet wird.

13. Verfahren nach einem der Ansprüche 10 bis 12, **dadurch gekennzeichnet, dass** beim Bearbeiten des Dichtungselements (16) Werkstoff auf das Dichtungselement (16) aufgetragen und/oder aufgetragener Werkstoff auf dem Dichtungselement (16) verteilt und/oder auf das Dichtungselement (16) aufgetragener Werkstoff ausgehärtet und/oder Material vom Dichtungselement (16) abgetragen wird.

14. Verfahren nach einem der Ansprüche 10 bis 13, **dadurch gekennzeichnet, dass** das Dichtungselement (16) und die Bearbeitungseinrichtung (15) manuell und/oder mittels eines Motors, insbesondere eines Boroskopmotors, und/oder mit einer Geschwindigkeit zwischen 1 U/min und 10 U/min relativ zueinander bewegt werden.

## Geänderte Patentansprüche

### Geänderte Patentansprüche gemäss Regel 137(2) EPÜ.

**1.** Bearbeitungsgerät (14) zum Einbringen in einen Innenraum (24) einer Gasturbine (10) und zum Bearbeiten eines innerhalb eines Gehäuses (12) einer Gasturbine (10) angeordneten Dichtungselements (16), wobei
das Bearbeitungsgerät (14) zumindest im teil-montierten Zustand der Gasturbine (10) zumindest bereichsweise durch eine Öffnung (22) des Gehäuses (12) in einen Innenraum (24) der Gasturbine (10) einbringbar ist, und
eine Bearbeitungseinrichtung (15) umfasst, mittels welcher das Dichtungselement (16) nach dem Einbringen des Bearbeitungsgeräts (14) unter relativem Bewegen der Bearbeitungseinrichtung (15) gegenüber dem Dichtungselement (16) bearbeitbar ist,
**dadurch gekennzeichnet, dass**
das Bearbeitungsgerät zum Bearbeiten eines gehäusefesten Dichtungselements (16) und/oder eines rotorfesten Dichtungselements (16) ausgebildet ist und zum Anordnen am Gehäuse (12) und/oder an einem Rotor (18) der Gasturbine (10) vorgesehen ist.

**2.** Bearbeitungsgerät (14) nach Anspruch 1, **dadurch gekennzeichnet, dass** dieses eine mit der Bearbeitungseinrichtung (15) verbundene Halteeinrichtung (30) umfasst, mittels welcher das Bearbeitungsgerät (14) lösbar an einem Bauteil der Gasturbine (10) festlegbar ist.

**3.** Bearbeitungsgerät (14) nach Anspruch 2, **dadurch gekennzeichnet, dass** die Halteeinrichtung (30) zum lösbaren Festlegen des Bearbeitungsgeräts (14) am Gehäuse (12) und/oder am Rotor (18), insbesondere zwischen benachbarten Laufschaufeln (20) des Rotors (18), ausgebildet ist.

**4.** Bearbeitungsgerät (14) nach Anspruch 2 oder 3, **dadurch gekennzeichnet, dass** die Halteeinrichtung (30) einen nachgiebigen Haltekörper (32), insbesondere einen Fluidsack, dessen Volumen zum Festlegen des Bearbeitungsgeräts (14) vergrößerbar und zum Lösen des Bearbeitungsgeräts (14) verkleinerbar ist, und/oder einen vorzugsweise schaltbaren Magneten und/oder eine Halteklammer umfasst.

**5.** Bearbeitungsgerät (14) nach einem der Ansprüche 1 bis 4, **dadurch gekennzeichnet, dass** die Bearbeitungseinrichtung (15):
- ein Trennwerkzeug, insbesondere ein Schleifwerkzeug (36), zur Formänderung des Dichtungselements (16); und/oder
- einen Spachtel (26) zum Auftragen und/oder Verteilen eines auf das Dichtungselement (16) aufzutragenden Werkstoffs; und/oder
- einen Werkstoffbehälter (28) zum Bereitstellen des auf das Dichtungselement (16) aufzutragenden Werkstoffs; und/oder
- eine Härtungseinrichtung (38) zum Aushärten von auf das Dichtungselement (16) aufgetragenem Werkstoff; und/oder
- eine Energiequelle, insbesondere eine Batterie, zum Versorgen des Bearbeitungsgeräts (14) mit Betriebsenergie; und/oder
- eine Steuer- oder Regeleinrichtung zum Steuern und/oder Regeln des Bearbeitungsgeräts (14); und/oder
- eine Zuführleitung, insbesondere einen Schlauch, mittels welcher Werkstoff zum Dichtungselement (16) transportierbar und durch eine Austrittsöffnung (34), insbesondere durch eine Düse, auf das Dichtungselement (16) aufbringbar ist,b
umfasst.

**6.** Bearbeitungsgerät (14) nach einem der Ansprüche 1 bis 5, **dadurch gekennzeichnet, dass** zumindest die Bearbeitungseinrichtung (15) in sich beweglich, insbesondere biegsam und/oder ein- oder mehrfach gelenkig ausgebildet ist.

**7.** Bearbeitungsgerät (14) nach einem der Ansprüche 1 bis 6, **dadurch gekennzeichnet, dass** dieses eine Ermittlungseinrichtung zum Befunden des Dichtungselements (16) umfasst.

**8.** Bearbeitungsgerät (14) nach einem der Ansprüche 1 bis 7, **dadurch gekennzeichnet, dass** die Bearbeitungseinrichtung (15) an einem bezüglich der Einführrichtung des Bearbeitungsgeräts (14) distalen oder proximalen Endbereich des Bearbeitungsgeräts (14) angeordnet ist.

**9.** Verfahren zum Bearbeiten eines innerhalb eines Gehäuses (12) einer Gasturbine (10) angeordneten Dichtungselements (16), folgende Schritte umfassend:
- Bereitstellen eines Bearbeitungsgeräts (14) gemäß einem der Ansprüche 1 bis 8;
- zumindest bereichsweises Einbringen eines Bearbeitungsgeräts (14) durch eine Öffnung (22) des Gehäuses (12) in einen Innenraum (24) der Gasturbine (10); und
- Beatbeiten des Dichtungselements (16) mittels einer Bearbeitungseinrichtung (15) des Bearbeitungsgeräts (14) unter relativem Bewegen der Bearbeitungseinrichtung (15) gegenüber dem Dichtungselement (16),
wobei alle Verfahrensschritte zumindest im teil-montierten Zustand der Gasturbine (10) durchgeführt werden.

**10.** Verfahren nach Anspruch 9, **dadurch gekennzeichnet, dass** zumindest die Bearbeitungseinrichtung (15) bereichsweise und/oder vollständig durch die Öffnung (22) des Gehäuses (12) in den Innenraum der Gasturbine (10) eingebracht wird, wonach ein rotorfestes Dichtungselement (16) der Gasturbine (10) unter relativem Bewegen des Rotors (18) gegenüber dem Gehäuse (12) mittels der Bearbeitungseinrichtung (16) bearbeitet wird.

**11.** Verfahren nach Anspruch 9, **dadurch gekennzeichnet, dass** das Bearbeitungsgerät (14) zunächst vollständig in den Innenraum (24) der Gasturbine (10) eingebracht und mittels einer Halteeinrichtung (30) lösbar am Rotor (18) der Gasturbine (10) festgelegt wird, wonach ein gehäusefestes Dichtungselement (16) der Gasturbine (10) unter relativem Bewegen des Rotors (18) gegenüber dem Gehäuse (12) mittels der Bearbeitungseinrichtung (15) bearbeitet wird.

**12.** Verfahren nach einem der Ansprüche 9 bis 11, **dadurch gekennzeichnet, dass** beim Bearbeiten des Dichtungselements (16) Werkstoff auf das Dichtungselement (16) aufgetragen und/oder aufgetragener Werkstoff auf dem Dichtungselement (16) verteilt und/oder auf das Dichtungselement (16) aufgetragener Werkstoff ausgehärtet und/oder Material vom Dichtungselement (16) abgetragen wird.

**13.** Verfahren nach einem der Ansprüche 9 bis 12, **dadurch gekennzeichnet, dass** das Dichtungselement (16) und die Bearbeitungseinrichtung (15) manuell und/oder mittels eines Motors, insbesondere eines Boroskopmotors, und/oder mit einer Geschwindigkeit zwischen 1 U/min und 10 U/min relativ zueinander bewegt werden.
